(19) Europäisches Patentamt / European Patent Office / Office européen des brevets

(11) **EP 3 707 018 B1**

(12) **FASCICULE DE BREVET EUROPEEN**

(45) Date de publication et mention de la délivrance du brevet:
**12.03.2025 Bulletin 2025/11**

(21) Numéro de dépôt: **18804676.7**

(22) Date de dépôt: **06.11.2018**

(51) Classification Internationale des Brevets (IPC):
**B60C 23/04** *(2006.01)*

(52) Classification Coopérative des Brevets (CPC):
**B60C 23/0457; B60C 23/0476**

(86) Numéro de dépôt international:
**PCT/FR2018/052731**

(87) Numéro de publication internationale:
**WO 2019/092352 (16.05.2019 Gazette 2019/20)**

(54) **PROCEDE DE DETECTION D'UNE FUITE D'UN PNEUMATIQUE D'UN VEHICULE A L'ARRET**

VERFAHREN ZUR DETEKTION EINES LECKS IN EINEM REIFEN EINES STATIONÄREN FAHRZEUGS

METHOD FOR DETECTING A LEAK IN A TYRE OF A STATIONARY VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2017 FR 1760606**

(43) Date de publication de la demande:
**16.09.2020 Bulletin 2020/38**

(73) Titulaire: **Compagnie Générale des Etablissements Michelin**
**63000 Clermont-Ferrand (FR)**

(72) Inventeurs:
• **GRECO, Mathieu**
**63040 Clermont-Ferrand Cedex 9 (FR)**
• **MUHLHOFF, Olivier**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
DE-A1- 102011 003 712    US-A1- 2006 082 451
US-B2- 6 545 599

## Description

### Domaine de l'invention

La présente invention est relative à un procédé de détection d'une fuite d'un pneumatique d'un véhicule. Plus particulièrement elle concerne l'exploitation de mesures faites lorsque le véhicule est à l'arrêt.

### État de la technique

La connaissance des pressions de gonflage des pneumatiques ne suffit pas pour donner au conducteur d'un véhicule une information fiable et utile. La consultation permanente de ces indications risque plus d'être fastidieuse que réellement utile. En effet, les mesures de pression et/ou de température du gaz de gonflage de la cavité interne des pneumatiques varient énormément en roulage en raison de l'échauffement dû aux pertes hystérétiques des mélanges les constituants, de l'influence de la chaleur dégagée par les freins et des transferts de charge qui provoquent de légères variations de volume des pneumatiques. C'est pourquoi les systèmes usuels de surveillance de la pression des pneumatiques d'un véhicule ou TPMS (acronyme de Tire Pressure Monitoring System) se contentent le plus souvent d'alerter le conducteur en cas d'une pression de gonflage d'un pneumatique inférieure de l'ordre de 20 % à la pression de gonflage nominale à froid pour les véhicules de tourisme. Cette pression de gonflage nominale à froid est donnée par les constructeurs du véhicule. Ces systèmes usuels alertent aussi lorsque la pression de gonflage est inférieure à 1,5 bar pour les véhicules de tourisme, valeur minimale de pression de gonflage selon les recommandations de l'ETRTO (European Tyre and Rim Technical Organization).

Depuis quelques années sont commercialisés des pneumatiques comportant sur leur surface interne une couche de produit auto-obturant. Ces produits élastiques, visqueux ou pâteux ont pour but d'obturer les trous causés par un objet perforant traversant la paroi d'un pneumatique.

Ces produits auto-obturant ne permettent pas d'éliminer complètement le risque d'une mise à plat d'un pneumatique à la suite d'une perforation, mais ont cependant permis de réduire de manière significative ce risque. On note aussi qu'une très grande partie des fuites résiduelles sont des fuites lentes ou très lentes qui peuvent intervenir pendant plusieurs jours voire plusieurs semaines avant d'être détectées par les systèmes actuels de surveillance des pneumatiques ou TPMS et très souvent c'est l'usager du véhicule qui découvre au moment de reprendre son véhicule que celui-ci a l'un de ses pneumatiques à plat et donc inapte à tout roulage.

Des procédés de détection de fuite sont notamment connus de US2006/082451, US6545599 et DE102022003712.

## Description de l'invention

L'invention a pour objet un procédé de détection d'une fuite d'un pneumatique d'un véhicule, le pneumatique comportant un organe de surveillance du pneumatique avec des capteurs de mesure de la pression et de la température et avec un mode de fonctionnement en roulage et un mode de fonctionnement à l'arrêt, dans lequel :

- on détermine l'arrêt du véhicule ; puis
- on lance ledit mode de fonctionnement à l'arrêt pour détecter pendant ledit arrêt du véhicule la présence ou non d'une fuite de gaz de gonflage du pneumatique, - après avoir lancé le mode de fonctionnement à l'arrêt de l'organe :
- on mesure périodiquement la pression $p_g$ et la température $\theta$ du gaz de la cavité interne du pneumatique ;
- on enregistre en mémoire non volatile les séries de valeurs de pression, de température et les instants des mesures ;
- on transforme la pression $p_g$ mesurée en pression absolue P et la température $\theta$ mesurée en température absolue T, on calcule le rapport P/T et on obtient une série de valeurs ;
- lorsque la série de valeurs diminue d'une valeur supérieure à un seuil donné, on déclenche une alerte.

Lorsque le véhicule est à l'arrêt, les sources de perturbation des mesures de l'organe de mesure sont réduites et il est plus aisé de détecter des variations faibles de la pression de gonflage liées à des fuites lentes ou très lentes.

Le suivi du rapport P/T permet, comme il est bien connu de l'homme du métier, de minimiser les conséquences des variations de température sur la précision des mesures. Ce rapport est proportionnel au nombre de moles de gaz présentes dans la cavité interne du pneumatique.

Selon un mode de réalisation, la période de mesure est constante et comprise entre 30 mn et 60 mn.

Selon ce mode de réalisation, on effectue une mesure toutes les 30 mn par exemple.

Selon un mode de réalisation alternatif, la période de mesure est continûment croissante entre deux mesures, au moins pendant un nombre de mesures donné.

La période de mesure peut augmenter après chaque mesure d'un facteur compris entre 1,5 et 4.

À titre d'exemple on peut par exemple doubler cette période après chaque mesure. On a alors une première mesure au lancement du mode de fonctionnement à l'arrêt de l'organe, puis une deuxième 15 minutes après, une troisième 30 minutes après, puis 1 heure après, puis 2 heures et ainsi de suite. Ce mode de réalisation permet de limiter le nombre de mesures et ainsi la consommation de la source d'énergie de l'organe.

Il est toutefois à noter qu'effectuer des mesures et les traiter consomme beaucoup moins d'énergie que le fait d'envoyer un message d'alerte à l'extérieur de l'organe.

Selon un mode de réalisation avantageux, la période de mesure est constante lorsqu'elle dépasse un seuil donné, et préférentiellement lorsque ladite période est supérieure ou égale à une semaine.

Le seuil de déclenchement de l'alerte peut être compris entre 2 et 7% du rapport P/T.

Selon un mode de réalisation alternatif, le seuil de déclenchement de l'alerte peut correspondre à une variation comprise entre 50 et 200 mbar et de préférence entre 100 et 150 mbar de la pression du gaz de la cavité interne du pneumatique.

On peut prendre comme référence les dernières mesures de pression et de température obtenues dans le mode de fonctionnement en roulage de l'organe. Il est aussi possible de prendre comme référence les premières mesures obtenues après le lancement du mode de fonctionnement à l'arrêt de l'organe.

Selon un mode de réalisation préférentiel, lors du déclenchement de l'alerte, on envoie un message d'alerte à au moins un destinataire pré-identifié.

Parmi ces destinataires, on peut trouver l'usager du véhicule, une adresse d'un garage où la fuite est susceptible de pouvoir être réparée et/ou d'un revendeur de pneumatiques.

Selon un mode de réalisation préférentiel, le véhicule comportant une unité centrale de surveillance des pneumatiques du véhicule, lors du déclenchement d'une alerte par un organe d'un pneumatique, cette alerte est transmise à au moins un destinataire pré-identifié via l'unité centrale de surveillance.

Cette unité centrale peut alors valider le diagnostic de détection d'une fuite et utiliser ses moyens de communication pour transmettre un message d'alerte adapté au destinataire pré-identifié.

Selon les cas, le message d'alerte peut être relayé vers un serveur extérieur ou un site internet, ou directement vers un téléphone portable ou un smartphone prédéterminé. Il peut être aussi transmis par un courriel.

Plusieurs moyens peuvent être utilisés pour déterminer l'arrêt du véhicule. Par exemple, le véhicule comportant un circuit de mise sous tension du tableau de bord, on peut déterminer l'arrêt du véhicule lorsque le circuit de mise sous tension est ouvert.

Lorsque l'organe comprend un accéléromètre pour détecter un mouvement de rotation du pneumatique, on peut déterminer l'arrêt du véhicule par l'absence de signal lié à la rotation du pneumatique pendant une durée supérieure à un seuil donné.

Le seuil de déclenchement de l'arrêt du véhicule et du lancement du mode à l'arrêt peut être compris entre 15 et 20 minutes par exemple.

Enfin, le mode de fonctionnement à l'arrêt de l'organe bascule dans le mode de fonctionnement en roulage lorsqu'on identifie que le véhicule n'est plus à l'arrêt.

Le pneumatique comporte avantageusement sur au moins une partie de sa paroi intérieure une couche de produit auto-obturant.

Le véhicule peut aussi comporter un mode de conduite autonome. Dans ce cas on entend par « conducteur du véhicule » l'ensemble des éléments permettant la conduite autonome du véhicule.

Le procédé selon l'un des objets de l'invention est particulièrement adapté dans le cas de tels véhicules car il a l'avantage d'avertir d'un problème de pneumatique avant tout essai de remise en service du véhicule.

## Définitions

Les abréviations suivantes sont utilisées dans le texte de la demande :

- p, pression de gonflage relative du gaz de la cavité interne d'un pneumatique ;
- P, pression de gonflage absolue ; $P = p + p_{atm}$;
- $p_{atm}$, pression atmosphérique, égale à 101,325 kPa dans des conditions standards ;
- $\theta$, température en degrés Celsius du gaz de la cavité interne d'un pneumatique ;
- T, température absolue en kelvins (degrés Celsius + 273,16).

## Description de la figure

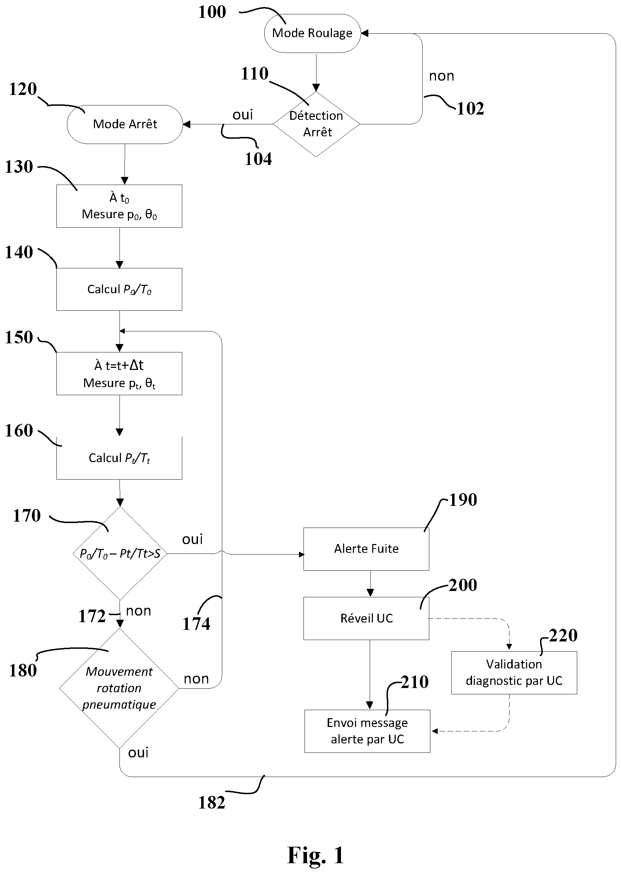

La figure 1 annexée illustre un schéma du mode de fonctionnement à l'arrêt d'un organe de surveillance.

## Description d'un mode de réalisation de l'invention

La figure 1 illustre un schéma des étapes principales du mode de fonctionnement à l'arrêt d'un organe de surveillance selon l'un des objets de l'invention.

L'organe de surveillance en question est disposé dans la cavité interne d'un pneumatique d'un véhicule et est équipé notamment d'un capteur de pression, d'un capteur de température, d'un micro-processeur, d'une mémoire non volatile, d'une horloge. L'organe peut émettre et recevoir des signaux radio. L'organe a un mode de fonctionnement en roulage et un mode de fonctionnement à l'arrêt du véhicule.

Le mode de fonctionnement en roulage permet usuellement d'avertir le conducteur du véhicule en cas de perte de pression du pneumatique, notamment lorsque la pression diminue de plus de 20 % de la valeur nominale de pression relative à froid donné par le constructeur du véhicule.

Cet organe de surveillance fait partie d'un système de surveillance des pneumatiques du véhicule composé de quatre organes de surveillance, un par pneumatique et d'une unité centrale ou UC. En mode de fonctionnement en roulage, l'UC reçoit périodiquement les mesures effectuées par les organes, les traite et émet à l'intention du conducteur ou de tout autre destinataire pré-identifié des messages adaptés à l'état des pneumatiques.

À l'étape 100, l'organe de surveillance est en mode de fonctionnement en roulage. Le véhicule est soit en roulage, soit à l'arrêt mais sans que les critères de détection d'un arrêt soient satisfaits.

À l'étape 110, l'organe teste la détection d'un arrêt. Cette détection peut être liée à l'ouverture du circuit de mise sous tension du tableau de bord, à l'absence de signal lié à la rotation du pneumatique pendant une durée supérieure à 15 ou 20 minutes, ou tout autre test convenu.

Si le ou les critères de détection d'un arrêt ne sont pas satisfaits, le mode de roulage se poursuit (boucle 102).

Dans le cas contraire, le mode de fonctionnement de l'organe de surveillance bascule dans le mode de fonctionnement à l'arrêt (boucle 104).

Au moment du basculement dans le mode de fonctionnement à l'arrêt, à $t_0$, l'organe effectue une mesure au moins de la pression de gonflage relative $p_0$ et de la température $\theta_0$ du gaz de la cavité interne du pneumatique (étape 130).

L'organe calcule la pression de gonflage absolue $P_0$ de la pression relative ainsi que la température absolue en kelvins :

$$P_0 = p_0 + p_{atm},$$

où pm est la pression atmosphérique ; et

$$T_0 = \theta_0 + 273,16$$

L'organe calcule ensuite le rapport $P_0/T_0$ (étape 140).

L'organe mesure ensuite périodiquement la pression relative et la température du gaz de la cavité interne du pneumatique.

À titre d'exemple, à t=t+ $\Delta$t, il mesure $p_t$ et $\theta_t$ (étape 150).

L'organe obtient ensuite les pressions absolues et les températures absolues et calcule le rapport : $P_t/T_t$ (étape 160).

À l'étape 170, l'organe teste la valeur du rapport $P_t/T_t$ relativement au rapport initial pris comme référence :

$$\frac{P_0}{T_0} - \frac{P_t}{T_t} \succ S$$

Si la différence est inférieure au seuil S (boucle 172), l'organe teste si le véhicule est toujours arrêté ou non (étape 180). Dans le mode de réalisation de la figure 1, on teste si on a détecté ou non une mise en rotation du pneumatique par exemple avec un accéléromètre de l'organe de surveillance.

Si les deux tests 170 et 180 sont négatifs, l'étape de mesure 150 est reconduite après une période $\Delta$t supérieure ou égale à la précédente (boucle 172).

Si le test 170 est positif, c'est-à-dire que la différence entre les deux valeurs, initiale et à t, est supérieure au test S l'organe conclu à l'étape 190 qu'il y a une fuite du gaz de la cavité interne du pneumatique. L'organe envoie alors un signal de réveil et d'alerte à l'unité centrale UC du système de surveillance des pneumatiques du véhicule (étape 200). L'UC transmet alors à au moins un destinataire pré-identifié un message d'alerte de fuite du pneumatique correspondant.

De façon optionnelle, après avoir réveillé l'UC, l'organe peut transmettre à l'UC l'ensemble des mesures réalisées pendant le mode de fonctionnement à l'arrêt (étape 220).

Cette étape optionnelle a l'avantage de permettre à l'UC de valider ou d'invalider le diagnostic de fuite ainsi que d'adapter le message envoyé au destinataire pré-identifié en fonction de l'intensité de la fuite détectée :

- Si le débit de fuite est inférieur par exemple à 0,05 ou 0,10 bar par mois, il s'agit de pertes naturelles de gonflage et aucun message n'est utile lorsque la pression de gonflage est correcte ;
- si le débit de fuite est supérieur à 0,10 bar/mois et inférieur à 1 bar par semaine, il s'agit d'une fuite anormale et il convient d'alerter le destinataire pré-identifié et de lui conseiller de *faire inspecter le pneumatique concerné ;*
- si le débit de fuite est supérieur à 1 bar par semaine, il s'agit d'une fuite rapide et le message peut être *d'inspecter le pneumatique concerné au plus tôt* et *d'interdire tout roulage* si la pression de gonflage est proche ou en-dessous de 1,5 bar.

Bien entendu, les messages envoyés peuvent être adaptés en fonction de la pression de gonflage relative mesurée du pneumatique.

Enfin, si le test 180 est positif, l'organe de surveillance bascule du mode de fonctionnement à l'arrêt vers le mode de fonctionnement en roulage (boucle 182) jusqu'au prochain arrêt du véhicule.

Pour mettre en œuvre le procédé de l'invention, on peut utiliser un dispositif de surveillance tel que présenté dans le brevet EP1354219B1 de la demanderesse.

**Revendications**

1. Procédé de détection d'une fuite d'un pneumatique d'un véhicule, ledit pneumatique comportant un organe de surveillance dudit pneumatique avec des capteurs de mesure de la pression et de la température et avec un mode de fonctionnement en roulage (102) et un mode de fonctionnement à l'arrêt (104), dans lequel :

- on détermine l'arrêt du véhicule (110) ; puis
- on lance ledit mode de fonctionnement à l'arrêt (104) pour détecter pendant ledit arrêt du véhicule la présence ou non d'une fuite de gaz de gonflage du pneumatique,

**caractérisé en ce que** après avoir lancé le mode de fonctionnement à l'arrêt :

- on mesure périodiquement la pression $p_g$ et la température $\theta$ du gaz de la cavité interne dudit pneumatique (130, 150);
- on enregistre en mémoire non volatile les séries de valeurs de pression, de température et les instants des mesures ;
- on transforme la pression $p_g$ mesurée en pression absolue P et la température $\theta$ mesurée en température absolue T, on calcule le rapport P/T (140, 160) et on obtient une série de valeurs ;
- lorsque ladite série de valeurs diminue d'une valeur supérieure à un seuil donné (S), on déclenche une alerte (190).

2. Procédé de détection selon la revendication 1, dans lequel, la période de mesure est constante et comprise entre 30 mn et 60 mn.

3. Procédé de détection selon la revendication 1, dans lequel, la période de mesure est continûment croissante pendant au moins un nombre de mesures donné.

4. Procédé de détection selon la revendication précédente, dans lequel la période de mesure augmente après chaque mesure d'un facteur compris entre 1,5 et 4.

5. Procédé de détection selon l'une des revendications 3 ou 4, dans lequel la période de mesure est constante lorsqu'elle dépasse un seuil donné (S), et préférentiellement lorsque ladite période est supérieure ou égale à une semaine.

6. Procédé de détection selon l'une quelconque des revendications 1 à 5, dans lequel ledit seuil (S) est compris entre 2 et 7% dudit rapport P/T.

7. Procédé de détection selon l'une quelconque des revendications 1 à 5, dans lequel ledit seuil (S) correspond à une variation comprise entre 50 et 200 mbar et de préférence entre 100 et 150 mbar de la pression du gaz de la cavité interne du pneumatique.

8. Procédé de détection selon l'une des revendications 6 ou 7, dans lequel on prend comme référence pour le rapport P/T la ou les dernières mesures de pression et de température obtenues dans le mode de fonctionnement en roulage de l'organe.

9. Procédé de détection selon l'une des revendications 6 ou 7, dans lequel on prend comme référence pour le rapport P/T la ou les premières mesures de pression et de température obtenues dans le mode de fonctionnement à l'arrêt de l'organe.

10. Procédé de détection selon l'une quelconque des revendications précédentes, dans lequel, lors du déclenchement de l'alerte, on envoie un message d'alerte à au moins un destinataire pré-identifié.

11. Procédé de détection selon la revendication précédente, dans lequel, le véhicule comportant une unité centrale (UC) de surveillance des pneumatiques du véhicule, lors du déclenchement d'une alerte, l'organe dudit pneumatique transmet le message d'alerte à au moins un destinataire pré-identifié via ladite unité centrale de surveillance (UC).

12. Procédé de détection selon l'une quelconque des revendications 1 à 11, dans lequel, ledit véhicule comportant un circuit de mise sous tension du tableau de bord, on détermine l'arrêt du véhicule lorsque ledit circuit de mise sous tension est ouvert.

13. Procédé de détection selon l'une quelconque des revendications 1 à 11, dans lequel on détermine l'arrêt du véhicule par l'absence de poids sur le siège du conducteur.

14. Procédé de détection selon l'une quelconque des revendications 1 à 11, dans lequel, l'organe comportant un accéléromètre pour détecter un mouvement de rotation dudit pneumatique, on détermine l'arrêt du véhicule par l'absence de signal lié au mouvement de rotation du pneumatique pendant une durée supérieure à un seuil donné.

15. Procédé de détection selon la revendication précédente, dans lequel on détermine l'arrêt du véhicule après une durée comprise entre 15 et 60 minutes.

16. Procédé de détection selon l'une quelconque des revendications précédentes, dans lequel le mode de fonctionnement à l'arrêt dudit organe bascule dans le mode de fonctionnement en roulage lorsqu'on identifie que le véhicule n'est plus à l'arrêt, et préférentiellement lorsqu'un mouvement de rotation dudit pneumatique est détecté.

17. Procédé de détection selon l'une quelconque des revendications précédentes, dans lequel le pneumatique comporte sur au moins une partie de sa paroi intérieure une couche de produit auto-obturant.

18. Procédé de détection selon l'une quelconque des revendications précédentes, dans lequel le véhicule comporte un mode de conduite autonome.

**Patentansprüche**

1. Verfahren zur Detektion eines Lecks eines Reifens eines Fahrzeugs, wobei der Reifen ein Organ zur Überwachung des Reifens mit Sensoren zur Messung des Drucks und der Temperatur und mit einem Fahrbetriebsmodus (102) und einem Stillstandsbetriebsmodus (104) aufweist, wobei:

- der Stillstand des Fahrzeugs bestimmt wird (110); danach
- der Stillstandsbetriebsmodus (104) eingeleitet wird, um während des Stillstands des Fahrzeugs das Vorhandensein oder Nichtvorhandensein einer Leckage von Aufblasgas aus dem Reifen zu detektieren,

**dadurch gekennzeichnet, dass**, nachdem der Stillstandsbetriebsmodus eingeleitet wurde:

- periodisch der Druck $p_g$ und die Temperatur $\theta$ des Gases des Innenhohlraums des Reifens gemessen werden (130, 150);
- die Reihen von Druck- und Temperaturwerten und die Zeitpunkte der Messungen in einem nichtflüchtigen Speicher abgespeichert werden;
- der gemessene Druck $p_g$ in einen absoluten Druck P und die gemessene Temperatur $\theta$ in eine absolute Temperatur T umgewandelt werden, das Verhältnis P/T berechnet wird (140, 160) und eine Reihe von Werten erhalten wird;
- wenn sich die Reihe von Werten um einen Wert verkleinert, der größer als ein gegebener Schwellenwert (S) ist, ein Alarm ausgelöst wird (190).

2. Verfahren zur Detektion nach Anspruch 1, wobei die Messperiode konstant ist und zwischen 30 min und 60 min beträgt.

3. Verfahren zur Detektion nach Anspruch 1, wobei die Messperiode während mindestens einer gegebenen Anzahl von Messungen kontinuierlich zunehmend ist.

4. Verfahren zur Detektion nach dem vorhergehenden Anspruch, wobei sich die Messperiode nach jeder Messung um einen Faktor vergrößert, der zwischen 1,5 und 4 liegt.

5. Verfahren zur Detektion nach einem der Ansprüche 3 oder 4, wobei die Messperiode konstant ist, wenn sie einen gegebenen Schwellenwert (S) überschreitet, und vorzugsweise wenn die Periode größer oder gleich einer Woche ist.

6. Verfahren zur Detektion nach einem der Ansprüche 1 bis 5, wobei der Schwellenwert (S) zwischen 2 und 7 % des Verhältnisses P/T liegt.

7. Verfahren zur Detektion nach einem der Ansprüche 1 bis 5, wobei der Schwellenwert (S) einer Veränderung des Drucks des Gases des Innenhohlraums des Reifens entspricht, die zwischen 50 und 200 mbar und vorzugsweise zwischen 100 und 150 mbar liegt.

8. Verfahren zur Detektion nach einem der Ansprüche 6 oder 7, wobei als Bezugsgröße für das Verhältnis P/T der letzte oder die letzten Druck- und Temperaturmesswerte genommen werden, die im Fahrbetriebsmodus des Organs erhalten wurden.

9. Verfahren zur Detektion nach einem der Ansprüche 6 oder 7, wobei als Bezugsgröße für das Verhältnis P/T der erste oder die ersten Druck- und Temperaturmesswerte genommen werden, die im Stillstandsbetriebsmodus des Organs erhalten wurden.

10. Verfahren zur Detektion nach einem der vorhergehenden Ansprüche, wobei bei der Auslösung des Alarms eine Alarmmeldung an mindestens einen zuvor festgelegten Empfänger gesendet wird.

11. Verfahren zur Detektion nach dem vorhergehenden Anspruch, wobei, wenn das Fahrzeug eine zentrale Überwachungseinheit (UC) der Reifen des Fahrzeugs aufweist, bei der Auslösung eines Alarms das Organ des Reifens die Alarmmeldung über die zentrale Überwachungseinheit (UC) an mindestens einen zuvor festgelegten Empfänger überträgt.

12. Verfahren zur Detektion nach einem der Ansprüche 1 bis 11, wobei, wenn das Fahrzeug einen Stromkreis zum Einschalten des Armaturenbretts aufweist, der Stillstand des Fahrzeugs bestimmt wird, wenn der Stromkreis zum Einschalten geöffnet ist.

13. Verfahren zur Detektion nach einem der Ansprüche 1 bis 11, wobei der Stillstand des Fahrzeugs anhand des Fehlens eines Gewichts auf dem Fahrersitz bestimmt wird.

14. Verfahren zur Detektion nach einem der Ansprüche 1 bis 11, wobei, wenn das Organ einen Beschleunigungsmesser zum Detektieren einer Drehbewegung des Reifens aufweist, der Stillstand des Fahrzeugs anhand des Fehlens eines mit der Drehbewegung des Reifens zusammenhängenden Signals während einer Dauer, die größer als ein gegebener Schwellenwert ist, bestimmt wird.

**15.** Verfahren zur Detektion nach dem vorhergehenden Anspruch, wobei der Stillstand des Fahrzeugs nach einer Dauer zwischen 15 und 60 Minuten bestimmt wird.

**16.** Verfahren zur Detektion nach einem der vorhergehenden Ansprüche, wobei aus dem Stillstandsbetriebsmodus des Organs in den Fahrbetriebsmodus gewechselt wird, wenn erkannt wird, dass das Fahrzeug nicht mehr stillsteht, und vorzugsweise wenn eine Drehbewegung des Reifens detektiert wird.

**17.** Verfahren zur Detektion nach einem der vorhergehenden Ansprüche, wobei der Reifen auf wenigstens einem Teil seiner Innenwand eine Schicht eines selbstdichtenden Produkts aufweist.

**18.** Verfahren zur Detektion nach einem der vorhergehenden Ansprüche, wobei das Fahrzeug einen autonomen Fahrmodus aufweist.


**Claims**

**1.** Method for detecting a leak from a tyre of a vehicle, said tyre including a member for surveillance of said tyre with sensors for measuring the pressure and the temperature and having a driving operating mode (102) and a stationary operating mode (104), in which:

- it is determined that the vehicle is stationary (110); then
- said stationary operating mode (104) is launched to detect when the vehicle is stationary the presence or the absence of a leak of inflating gas from the tyre,

**characterized in that** after the stationary operating mode of the member has been launched:

- there are periodically measured the pressure $p_g$ and the temperature $\theta$ of the gas in the internal cavity of said tyre (130, 150);
- the series of pressure and temperature values and the measurement times are stored in nonvolatile memory;
- the measured pressure $p_g$ is converted to an absolute pressure P and the measured temperature $\theta$ is converted to an absolute temperature T, the ratio P/T (140, 160) is calculated and a series of values is obtained;
- if said series of values decreases by an amount above a given threshold (S), an alert is triggered (190).

**2.** Detection method according to claim 1, in which the measurement period is constant and between 30 minutes and 60 minutes inclusive.

**3.** Detection method according to claim 1, in which the measurement period increases continuously during at least a given number of measurements.

**4.** Detection method according to the preceding claim, in which the measurement period increases after each measurement by a factor between 1.5 and 4 inclusive.

**5.** Detection method according to claim 3 or 4, in which the measurement period is constant if it exceeds a given threshold (S) and preferably if said period is greater than or equal to one week.

**6.** Detection method according to any one of claims 1 to 5, in which said threshold (S) is between 2 and 7% inclusive of said ratio P/T.

**7.** Detection method according to any one of claims 1 to 5, in which said threshold (S) corresponds to a variation between 50 and 200 mbar inclusive and preferably between 100 and 150 mbar inclusive of the pressure of the gas from the internal cavity of the tyre.

**8.** Detection method according to claim 6 or 7, in which there is taken as the reference for the ratio P/T the last measurement or measurements of pressure and of temperature obtained in the driving operating mode of the member.

**9.** Detection method according to claim 6 or 7, in which there is taken as the reference for the ratio P/T the last measurement or measurements of pressure and of temperature obtained in the stationary operating mode of the member.

**10.** Detection method according to any one of the preceding claims, in which, upon triggering of the alert, an alert message is sent to at least one pre-identified addressee.

**11.** Detection method according to the preceding claim, in which, the vehicle including a central unit (UC) for surveillance of the tyres of the vehicle, upon the triggering of an alert the member of said tyre transmits the alert message to at least one pre-identified recipient via said surveillance central unit (UC).

**12.** Detection method according to any one of claims 1 to 11, in which, said vehicle including a circuit for powering up the dashboard, that the vehicle is stationary is determined when said power up circuit is open.

**13.** Detection method according to any one of claims 1 to 11, in which it is determined that the vehicle is stationary by virtue of the absence of weight on the seat of the driver.

14. Detection method according to any one of claims 1 to 11, in which the member including an accelerometer for detecting a movement of rotation of said tyre, it is determined that the vehicle is stationary by the absence of any signal linked to the movement in rotation of the tyre for a time above a given threshold.

15. Detection method according to the preceding claim, in which it is determined that the vehicle is stationary after between 15 and 60 minutes inclusive.

16. Detection method according to any one of the preceding claims, in which the stationary operating mode of said vehicle switches to the driving operating mode if it is identified that the vehicle is no longer stationary and preferably if a movement in rotation of said tyre is detected.

17. Detection method according to any one of the preceding claims, in which the tyre includes on at least a part of its interior wall a layer of a self-blocking product.

18. Detection method according to any one of the preceding claims, in which the vehicle has an autonomous driving mode.

**Fig. 1**

**EP 3 707 018 B1**

## RÉFÉRENCES CITÉES DANS LA DESCRIPTION

**Documents brevets cités dans la description**

- US 2006082451 A
- US 6545599 B
- DE 102022003712
- EP 1354219 B1